# EUROPEAN PATENT APPLICATION

(11) **EP 4 682 180 A1**
(43) Date of publication of application: **21.01.2026**
(21) Application number: 24189594.5
(22) Date of filing: 18.07.2024
(51) Int. Cl.: C08F 220/18, C08F 265/02, C09J 4/06

(54) **THERMALLY CONDUCTIVE (METH)ACRYLATE ADHESIVE**

(71) Applicant: Sika Technology AG, 6340 Baar (CH)
(72) Inventor: DELGADO, Mabell, 8048 Zürich (CH); STORRER, Denise, 8048 Zürich (CH)
(74) Representative: Sika Patent Attorneys

(57) **Abstract**

The invention relates to a thermally conductive two-component (meth)acrylate adhesive composition, comprising in a first component at least one monomer comprising free-radically polymerizable groups, containing especially at least one reactive double bond, at least one elastomer comprising a polyurethane (meth)acrylate and comprising in a second component at least one initiator for free-radical curing and optionally at least one plasticizer, characterized in that the total composition comprises at least 70 wt.-% of thermally conductive filler.

The two-component composition can be formulated to show optimal thermal conductivity properties that are suitable for bonding of batteries, electric or electronic devices, especially in automobile assembly. These compositions are preferably cured at room temperature and formulated without volatile and odor-intensive (meth)acrylate monomers such as MMA.

## Description

### Technical Field

The invention relates to a two-component thermally conductive (meth)acrylate adhesive and its use, particularly in battery bonding applications.

### Prior Art

(Meth)acrylate compositions have long been used in particular as adhesives or adhesive coatings since they have good mechanical and optical stability and especially allow very good adhesion to many substrates. Two component (meth)acrylate compositions are typically easy to apply, curable by room temperature and allow for good structural fixation.

With the increasing use of batteries and electronic equipment nowadays, the demand for suitable adhesives and sealants in contact with these electronic elements or devices has risen significantly. Especially in electric automobile assembly, large batteries and a multitude of electronic parts require large amounts of such sealants and adhesives that cover, seal, or bond electronics and batteries directly. A particular requirement for these adhesives and sealant materials is a high heat conductivity, since batteries and electronics generate significant amounts of heat while operating that must be dissipated efficiently to prevent detrimental heat accumulation on the batteries and electronic parts.

This aspect has proven to be a severe problem for traditionally used curable compositions. Commonly known adhesives possess a poor heat conductivity and rather act as thermal insulators than efficient heat conductors. There have been several attempts to formulate curable compositions with high heat conductivity. The current state of the art most commonly uses silicone-based compositions, silane-functional polymer compositions and polyurethane polymers with special fillers. These marketed compositions are curable and show adequate thermal conductivity. However, there is no known state of the art that encompasses two-component (meth)acrylate compositions addressing the issue of thermally conductive adhesives for battery bonding.

Thus, it remains challenging to create a curable two-component (meth)acrylate composition which fulfills the requirements of high thermal conductivity and adequate mechanical properties sought after in battery bonding.

### Summary of the Invention

It is accordingly an object of the present invention to provide two-component (meth)acrylate compositions which due to their thermal conductive properties are suitable for electronic equipment, in particular batteries, and which simultaneously exhibit sufficient mechanical properties. Furthermore, these compositions can be easily applied without pre-treatment, show reduced viscosity and are curable at room temperature. Also, they are preferably formulated without the use of volatile and odor-intensive (meth)acrylate monomers such as methyl methacrylate (MMA).

It has now been found that, surprisingly, this object is achieved by compositions as claimed in claim 1.

### Ways of executing the invention

The present invention relates in a first aspect to a two-component composition consisting of a first component **A** comprising
- at least one monomer **M** comprising free-radically polymerizable groups, containing especially at least one reactive double bond;
- at least one elastomer **E** comprising a polyurethane (meth)acrylate;

and a second component **B** comprising
   - at least one initiator I; for free radical curing;
   - optionally at least one plasticizer **P;**
characterized in that the total composition comprises at least 70 wt.-% of thermally conductive filler **TCF.**

Further aspects of the invention are the subject of further independent claims. Particularly preferred embodiments of the invention are the subject of the dependent claims.

Substance names beginning with "poly", such as polyol or polyisocyanate, refer here to substances which formally contain per molecule two or more of the functional groups appearing in their name.

"Molecular weight" in the present document is to be understood as meaning the defined and discrete molar mass (in grams per mole) of a molecule or part of a molecule, also referred to as a "radical". The term "radical" is used in this document in a formal sense, meaning a molecular rest bound to an atom by a covalent bond, while the bond is formally "cut" to describe the molecular rest attached to it.

"Average molecular weight" denotes the number average Mn of an oligomeric or polymeric mixture, especially a polydisperse mixture, of molecules or radicals, which is typically determined by gel-permeation chromatography (GPC) against a polystyrene standard.

The term "(meth)acrylate" is to be understood as meaning "methacrylate" or "acrylate".

A dashed line in the formulae in this document in each case represents the bond between a substituent and the accompanying molecular radical, unless otherwise stated.

Unless otherwise stated, all industry standards or other standards mentioned in the document relate to the version of the industry standard or other standard that was valid at the time of filing of the patent application.

The terms "mass" and "weight" are used synonymously in this document. Thus a "percentage by weight" (wt.-%) is a percentage proportion by mass which, unless stated otherwise, refers to the mass (weight) of the overall composition or, depending on the context, of the entire molecule.

Thermal conductivity λ is defined as ability of material to transmit heat and it is measured in watts per square meter of surface area for a temperature gradient of 1 K per unit thickness of 1 m and is measured in watts per meter-kelvin (W/mK). Thermal conductivity of materials disclosed in this document are measured according to ASTM D5470-06.

A "thermally conductive filler" within the meaning of this document is any filler that when formulated in two components, with said filler present in the first component **A** in a weight ratio of at least 70% together with 20 wt.-% monomer and 10 % elastomer and a second component **B** with 20 wt.-% initiator, 30 wt.-% plasticizer and 50 wt.-% of another, not necessarily thermally conductive, filler, mixed in a 10:1 ratio, the cured material exhibits a thermal conductivity, measured according to ASTM D5470, of at least 1.0 W/mK.

The term "room temperature" refers here to a temperature of 23±1 °C.

The term "standard climatic conditions" refers to a temperature of 23±1 °C and a relative air humidity of 50±5%.

A two-component (meth)acrylate composition refers to a composition in which the essential constituents of the composition are stored separately from one another until application. Normally, the first component **A** especially includes those ingredients of the described composition which comprise free-radically polymerizable groups, i.e. monomer **M** and elastomer **E.** The second component **B** especially includes the free radical formers, i.e. initiator **I.** Only shortly before or during the application of the composition are the two components mixed with one another, whereupon the mixed composition cures due to the free radical polymerization of the polymerizable groups initiated by the free radical formers. The mixing ratio of **A** to **B** is especially in the range from 1:1 to 10:1.

Component **A** initially comprises at least one monomer **M** comprising free-radically polymerizable groups, containing especially at least one reactive double bond.

Component **A** preferably comprises at least one monomer **M** according to formula (I). 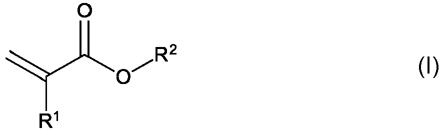 wherein
R¹ represents a hydrogen radical or a methyl group, preferably a methyl group;
R² represents a linear or branched monovalent hydrocarbyl radical having 2 to 20 carbon atoms and which optionally contains one or more C-C multiple bonds, and/or cycloaliphatic moieties, preferably a bicyclic moiety, and/or aromatic moieties, preferably a phenylic or benzylic moiety and/or heteroatoms, preferably nitrogen and/or oxygen.

In a preferred embodiment, R² in formula (I) represents either a linear or branched hydroxyalkyl group having 2 to 6 carbon atoms.

In another preferred embodiment, R² in formula (I) represents a monovalent hydrocarbyl radical having 4 to 12 carbon atoms comprising a cycloaliphatic moiety, especially a five- and six-membered ring, preferably containing at least one or two heteroatoms in the ring structure, more preferably containing at least one or two oxygens and/or nitrogens in the ring structure.

In an especially preferred embodiment, R² in formula (I) is a radical having 4 to 12 carbon atoms comprising an aromatic moiety. It is most preferably when R² in formula (I) is according to one of the groups in formula (Ia) to (Ib) 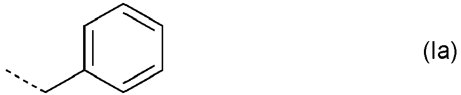 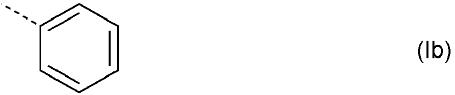 wherein the dashed lines in formulas (Ia) to (Ib) represent the bond between the oxygen atom and R². Examples of such monomers **M** are especially benzyl methacrylate (CAS-No. 2495-37-6), which is available form Evonik under the trade name VISIOMERO BNMA.

Preferably the monomer **M** comprises benzyl methacrylate.

Preferably, Monomers **M** according to formula (I) in combination with (Ia) or (Ib), especially benzyl methacrylate, are present in an amount that ranges from 1 to 10 wt.-%, more preferably from 3 to 8 wt.-%, most preferably from 4 to 6 wt.-%, based on the total weight of component **A.**

In an especially preferred embodiment, R² in formula (I) is a radical having 4 to 12 carbon atoms comprising a bicyclic moiety. It is most preferably when R² in formula (I) is according to one of the groups in formula (Ic) to (Id) 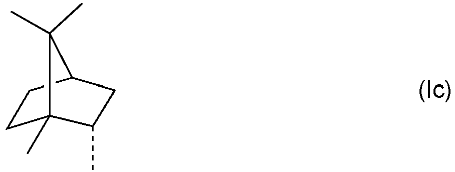 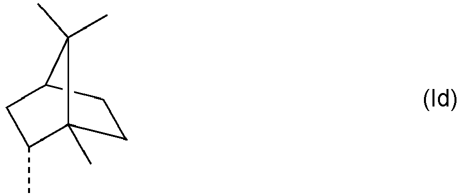 wherein the dashed lines in formulas (Ic) to (Id) represent the bond between the oxygen atom and R². Examples of such monomers **M** are especially isobornyl methacrylate (CAS-No. 7534-94-3), which is available from Evonik under the trade name VISIOMER^{®} Terra IBOMA and based to a significant degree on renewable sources.

Preferably the monomer **M** is isobornyl methacrylate.

Preferably, monomers **M** according to formula (I) in combination with (Ic) or (Id), especially isobornyl methacrylate, are present in an amount that ranges from 1 to 10 wt.-%, more preferably from 3 to 9 wt.-%, based on the total weight of component **A.**

Yet another class of preferred monomers **M** are multifunctional monomers, which contain more than one reactive double bond and their structure is according to formula (le) 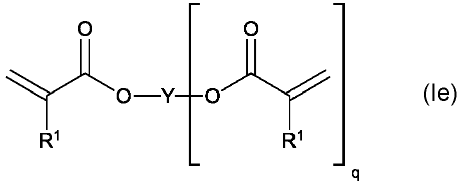 wherein
R¹ represents a hydrogen radical or a methyl group, preferably a methyl group;
Y represents either a hydrocarbyl radical having 2 to 20 carbon atoms, preferably a trimethyl propane after removal of the OH groups, or a polymeric diol after removal of the OH groups, or a Bisphenol A unit after removal of the OH groups, or a combination of these structures;
q represents a value from 1 to 3, preferably 1 to 2.

Such multifunctional monomers offer a good hardness and high cross-linking density and are, if employed, usually in combination with monofunctional monomers. Examples of such multifunctional monomers of formula (le) are especially trimethylolpropane trimethylacraylate (CAS-No. 3290-92-4) which is available from Miwon Specialty Chemical under the trade name Miramer M301 and difunctional ethoxylated bisphenol A methacrylate (CAS-No. 41637-38-1) which is available from Miwon Specialty Chemical under the trade name Miramer M245.

Preferably, monomers **M** according to formula (I) in combination with (le), especially trimethylolpropane trimethylacraylate, are present in an amount that ranges from 1 to 6 wt.-%, more preferably from 2 to 4 wt.-%, based on the total weight of component **A.**

Monomers **M** according to formula (I) in combination with (Ia) or (Ib), especially benzyl methacrylate, lead to compositions with especially good thermal conductivity.

In a preferred embodiment, monomers **M** according to formula (I) in combination with (Ia) or (Ib), especially benzyl methacrylate, are present in component **A** together with monomers **M** according to formula (I) in combination with (Ic) or (Id), especially isobornyl methacrylate in a ratio ranging from 4:1 to 1:4, preferably from 2:1 to 1:2.

In a preferred embodiment, monomers **M** according to formula (I) in combination with (Ia) or (Ib), especially benzyl methacrylate, are present in component **A** in an amount that ranges from 3 to 12 wt.-%, preferably from 3 to 9 wt.-%, most preferably from 4 to 6 wt.-%, together with monomers **M** according to formula (I) in combination with (Ic) or (Id), especially isobornyl methacrylate, in an amount that ranges from 3 to 12 wt.-%, preferably from 3 to 9 wt.-%, most preferably from 4 to 6 wt.-%, based on the total weight of component **A.**

Preferably, the inventive composition does not contain methyl methacrylate (MMA).

It goes without saying that any mixtures of these monomers **M** may also be employed.

Preferably, the monomer **M** is present in an amount that ranges from 3 to 25 wt.-%, more preferably from 5 to 20 wt.-%, most preferably from 5 to 15 wt.-%, based on the total weight of the component **A.**

Component **A** further comprises at least one elastomer **E** comprising a polyurethane (meth)acrylate.

Component **A** preferably comprises at least one elastomer **E** according to formula (II) 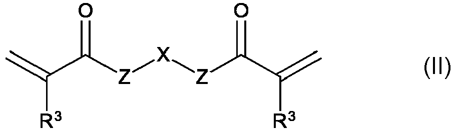 wherein
X represents a polymeric diol after removal of two OH groups;
Z represents O or NR', wherein R' is a hydrocarbyl radical or a hydrogen radical, preferably a hydrogen radical;
R³ represents either a hydrogen radical or a methyl group.

The elastomer **E** of formula (II) preferably has an average molecular weight of 500 to 40'000 g/mol, preferably 1'000 to 20'000 g/mol, most preferably 2'000 to 10'000 g/mol

In the elastomer **E** of formula (II) the radical X is a polymeric diol after removal of two OH groups, wherein this polymeric diol is in particular a polyalkylene diol, a polyoxyalkylene diol or a polyurethane diol; a polyhydroxy-functional ethylene-propylene, ethylene-butylene or ethylene-propylene-diene copolymer; a polyhydroxy-functional copolymer of dienes such as 1 ,3-butadiene or diene mixtures and vinyl monomers such as styrene, acrylonitrile or isobutylene; a polyhydroxy-functional polybutadiene polyol; a polyhydroxy-functional acrylonitrile/butadiene copolymer; or a polysiloxane diol.

Polyhydroxy-terminated acrylonitrile/butadiene copolymers are typically produced from carboxyl-terminated acrylonitrile/butadiene copolymers, commercially available for example under the name Hycar^{®} CTBN from Emerald Performance Materials, LLC, USA, and epoxides or amino alcohols. Suitable elastomers **E** of formula (II) are commercially available for example from Kraton Polymers, USA, or under the trade names Hycar^{®} VTB and Hycar^{®} VTBNX from Emerald Performance Materials, LLC, USA.

The elastomer **E** of is a polyurethane (meth)acrylate. Such compounds are typically producible from the reaction of at least one diol **DO** with at least one diisocyanate **DI** and one (meth)acrylic acid, one (meth)acrylamide or one (meth)acrylic ester having a hydroxyl group.

In a first process this reaction may be carried out by reacting the diol **DO** and the diisocyanate **DI** by customary processes, for example at temperatures of 50°C to 100°C, optionally with co-use of suitable catalysts, ensuring that the NCO groups are present in stoichiometric excess relative to the OH groups. The isocyanate-terminated polyurethane polymer resulting from this reaction is then reacted with a (meth)acrylic acid, a (meth)acrylamide or with a (meth)acrylic ester having a hydroxyl group, in particular with a hydroxyalkyl (meth)acrylate such as hydroxypropyl acrylate (HPA), hydroxypropyl methacrylate (HPMA), hydroxybutyl acrylate (HBA) or hydroxybutyl methacrylate (HBMA), preferably with hydroxyethyl acrylate (HEA) or hydroxyethyl methacrylate (HEMA), or with a monohydroxypoly(meth)acrylate of a polyol, preferably of glycerol or trimethylolpropane, to afford a polyurethane (meth)acrylate.

In a second process the diol **DO** may be reacted with the diisocyanate **DI,** wherein the OH groups are present in stoichiometric excess relative to the NCO groups. The hydroxyl-terminated polyurethane polymer resulting from this reaction may be esterified with a (meth)acrylic acid to afford the elastomer **E** of formula (II).

A further process for producing the elastomer **E** comprises a first step of reacting the (meth)acrylic acid, the (meth)acrylamide or the (meth)acrylic ester having a hydroxyl group, in particular hydroxyalkyl (meth)acrylate such as hydroxypropyl acrylate (HPA), hydroxypropyl methacrylate (HPMA), hydroxybutyl acrylate (HBA) or hydroxybutyl methacrylate (HBMA), preferably hydroxyethyl acrylate (HEA) or hydroxyethyl methacrylate (HEMA), or a monohydroxypoly(meth)acrylate of a polyol, preferably of glycerol or trimethylolpropane, with at least one diisocyanate **DI** which is employed in an amount such that the NCO groups are present in excess relative to the OH groups. In a subsequent reaction the resulting intermediate comprising an isocyanate group is reacted with at least one diol **DO** to afford the elastomer **E** of formula (II).

It is also possible to produce the elastomer **E** of formula (II) by esterification of a (meth)acrylic acid with a diol **DO,** wherein the diol **DO** is in stoichiometric excess. In a subsequent reaction the partially esterified diol reacts with a diisocyanate **DI** to afford the elastomer **E** of formula (II).

Preferred diols **DO** are polyoxyalkylene diols, also known as "polyether diols", polycarbonate diols and mixtures thereof. The most preferred diols are polyoxyethylene diols, polyoxypropylene diols or polyoxybutylene diols.

The polyoxyalkylene diols may have different degrees of unsaturation (measured according to ASTM D-2849-69 and reported in milliequivalents of unsaturation per gram of polyol (mEq/g)). Those with a low degree of unsaturation are produced for example using so-called double metal cyanide complex catalysts (DMC catalysts) while those with a higher degree of unsaturation are produced for example using anionic catalysts such as NaOH, KOH, CsOH or alkali metal alkoxides.

The use of polyoxyalkylene diols having a low degree of unsaturation, in particular of less than 0.01 mEq/g, is preferred for diols having a molecular weight of ≥ 2000 g/mol.

Suitable diisocyanates **DI** in principle include all diisocyanates. Examples include hexamethylene 1,6-diisocyanate (HDI), 2-methylpentamethylene 1,5-diisocyanate, 2,2,4- and 2,4,4-trimethylhexamethylene 1,6-diisocyanate (TMDI), dodecamethylene 1,12-diisocyanate, lysine and lysine ester diisocyanate, cyclohexane 1,3-diisocyanate, cyclohexane 1,4-diisocyanate, 1-isocyanato-3,3,5-trimethyl-5-isocyanatomethylcyclohexane (= isophorone diisocyanate or IPDI), perhydro-2,4'-diphenylmethane diisocyanate and perhydro-4,4'-diphenylmethane diisocyanate, 1,4-diisocyanato-2,2,6-trimethylcyclohexane (TMCDI), 1,3- and 1,4-bis(isocyanatomethyl)cyclohexane, m- and p-xylylene diisocyanate (m- and p-XDI), m- and p-tetramethyl-1,3-xylylene diisocyanate, m- and p-tetramethyl-1,4-xylylene diisocyanate, bis(1-isocyanato-1-methylethyl)naphthalene, tolylene 2,4-diisocyanate and 2,6-diisocyanate (TDI), diphenylmethane 4,4'-diisocyanate, 2,4'-diisocyanate, and 2,2'-diisocyanate (MDI), phenylene 1,3-diisocyanate and 1,4-diisocyanate, 2,3,5,6-tetramethyl-1,4-diisocyanatobenzene, naphthalene 1,5-diisocyanate (NDI), 3,3'-dimethyl-4,4'-diisocyanatobiphenyl (TODI), oligomers and polymers of the abovementioned isocyanates and also any desired mixtures of the abovementioned isocyanates.

Isophorone diisocyanate (IPDI) and methylene diphenyl diisocyanate (MDI) are especially preferred diisocyanates **DI.**

In a preferred embodiment, the elastomer **E** is a polyurethane (meth)acrylate with a polyether backbone, obtained from the reaction of at least one diol **DO,** in particular a polyether diol, preferably a polyoxypropylene diol, with at least one diisocyanate **DI** and one (meth)acrylic ester having a hydroxyl group, wherein
- The diol **DO** reacts with a diisocyanate **DI,** preferably isophorone diisocyanate (IPDI) or methylene diphenyl diisocyanate (MDI), which is present in stochiometric excess.
- And the resulting isocyanate-terminated polyurethane is reacted with the (meth)acrylic ester having a hydroxyl group, in particular with a hydroxyalkyl (meth)acrylate, preferably with hydroxyethyl acrylate (HEA) or hydroxyethyl methacrylate (HEMA), to afford the elastomer **E** of formula (II).

Preferably, the elastomer **E** is present in an amount that ranges from 1 to 15 wt.-%, more preferably from 2 to 12 wt.-%, most preferably from 4 to 8 wt.-%, based on the total weight of the component **A.**

The inventive two-component composition is characterized in that the total composition comprises at least 70 wt.-% of thermally conductive filler **TCF,** i.e. fillers that are thermally conductive. Said thermally conductive filler **TCF** preferably comprises or consists of aluminium oxide, aluminium hydroxide, boron nitride, aluminium nitride, zinc oxide, magnesium oxide, magnesium hydroxide, preferably aluminium hydroxide, and any mixture of these fillers.

The" total composition" refers to the fully mixed two-component composition, and at least 70 wt.-%, based on the total composition, of thermally conductive filler **TCF** must be in the total composition after mixing of the two components. Initially, before mixing, the components can have a higher or lower individual content of thermally conductive filler **TCF,** as long as the total composition contains at least 70 wt.-%.

The two-component composition may comprise other, non-thermally conductive fillers **F,** that do not satisfy the definition of thermally conductive fillers stated further above. Suitable fillers **F** include natural, ground or precipitated calcium carbonates (chalks), which are optionally coated with fatty acids, in particular stearates, montmorillonites, bentonites, barium sulfate (BaSO4, also known as barite or heavy spar), calcined kaolins, quartz flour, silicas, in particular pyrogenic silicas, hydrated magnesium silicates (talcs), especially talc powder, modified castor oil derivatives and polymer powders or polymer fibers and any mixture of these fillers.

In a preferred embodiment, both components **A** and **B** contain fillers, especially preferred are embodiments wherein one component contains thermally conductive filler **TCF** and the other component containing fillers **F.** In another preferred embodiment, one or both components **A** and **B** contain a mixture of thermally conductive filler **TCF** and other fillers **F.**

However, in all such embodiments, the total composition comprises at least 70 wt.-% of thermally conductive filler **TCF.**

Preferably, the thermally conductive filler **TCF** is present in the component **A.** Preferably, the other filler **F** is present in the component **B.**

Preferably, the composition in component A contains 70 to 90 wt.-% of thermally conductive filler **TCF,** more preferably 70 to 85 wt.-%, most preferably 75 to 85 wt.-% of thermally conductive filler **TCF,** based on the total weight of the component **A.**

Preferably, the component **B** contains 25 to 90 wt.-%, more preferably 50 to 85 wt.-%, most preferably 70 to 85 wt.-% of thermally conductive filler **TCF,** based on the total weight of component **B.**

In the same or different preferred embodiments, a thermally conductive filler **TCF** or a mixture of thermally conductive fillers **TCF** or a mixture of thermally conductive filler **TCF** and other filler **F** is used that combines different particle sizes. For example, it is advantageous to use a bimodal or multimodal particle size range for the employed fillers. When at least one filler ensemble with relatively large particles and at least another one with relatively small particles are used together, a higher density of close packing of spheres may be achieved, which is beneficial for heat conductivity and compounding when using relatively large amounts of thermally conductive filler **TCF.**

The thermally conductive filler **TCF** is in all embodiments advantageously added in powder form or at least finely particulate, in order to ensure homogeneous compounding when used in relatively large amounts.

In a preferred embodiment, the thermally conductive filler **TCF** is characterized in that said thermally conductive filler **TCF** comprises or consists of a multimodal aluminium hydroxide having a hydrophobic coating. This type of thermally conductive filler **TCF** combines the advantages of excellent flame-retardant properties and excellent thermal conductivity due to the possible high amounts that can be incorporated in the composition.

For example, thermal conductivity can be increased by adding a more thermally conductive filler **TCF.** For example, the thermal conductivity of suitable fillers rises from ATH < Al2O3 < MgO < BN. The choice of suitable fillers or their mixture is however preferably limited to highly dielectric fillers, especially in electric or electronic applications where dielectric properties are a safety requirement.

It goes without saying that mixtures of thermally conductive fillers **TCF,** especially mixtures of thermally conductive fillers **TCF** with non-thermally conductive fillers **F,** can be employed as well.

In a preferred embodiment, the component **A** additionally contains between 0.5 wt.-% to 5 wt.-%, preferably between 0.75 to 3 wt.-%, most preferably between 1 to 2.5 wt.-%, based on the total weight of component **A,** of an adhesion promoter **AP,** in particular an organosilane, and/or a metal (meth)acrylate or a (meth)acrylate of formula (III) 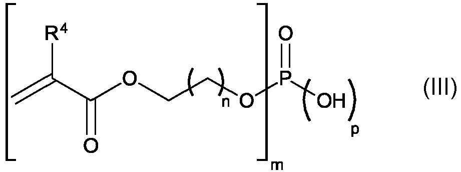 wherein the radical R⁴ is either a hydrogen atom or a methyl group;
n represents a value from 1 to 15, in particular from 1 to 5, preferably from 1 to 3;
m represents a value from 1 to 3;
p represents a value of 3 minus m.

Preferred metal (meth)acrylates are metal (meth)acrylates of calcium, magnesium or zinc having a hydroxyl group and/or (meth)acrylic acid or (meth)acrylate as a ligand or anion. Particularly preferred metal (meth)acrylates are zinc (meth)acrylate, calcium (meth)acrylate, Zn(OH) (meth)acrylate and magnesium (meth)acrylate. Examples of such metal (meth)acrylates are especially zinc dimethacrylates (CAS-No. 13189-00-9), which is available from Resin solutions under the trade name Dymalink^{®} 708.

Preferred (meth)acrylates of formula (III) are 2-methacryloyloxyethyl phosphate, bis(2-methacryloyloxyethyl) phosphate and tris(2-methacryloyloxyethyl) phosphate and mixtures thereof. Examples of such (meth)acrylates of formula (III) are especially 2-hydroxyethayl methacrylate phosphate in ethoxylated trimethylpropane triacrylate (CAS-No. 28961-43-5) which is available from Arkema under the trade name SR9051.

Preferred organosilanes are epoxy-functional silanes, in particular 3-glycidoxypropyltrimethoxysilane.

Yet another type of preferred adhesion promoters **AP** are acid-based adhesion promoters, such as acrylic acid.

Adhesion promoters **AP** used to improve adhesion to special substrates. The use of phosphorus-containing (meth)acrylates according to formula (III) is especially advantageous for metal surfaces (aluminum, anodized aluminum, etc.). Organosilanes improve adhesion to glass and ceramic surfaces. Metal (meth)acrylates are also advantageous for bonding to metal surfaces for example.

It goes without saying that mixtures of different adhesion promoters may also be employed.

In a preferred embodiment, the composition in component **A** additionally contains 0.1 to 2.5 wt.-%, preferably 0.5 to 2 wt.-%, based on the total weight of **A,** of at least one catalyst **C,** which acts as an activator for free-radical curing.

Such a catalyst C is in particular a tertiary amine, in particular an aromatic amine, a transition metal salt or a transition metal complex. Examples of such suitable tertiary amines are N,N-dimethylaniline, N,N-diethylaniline, N,N-dimethyl-*p*-toluidine, N,N-diethyl-*p*-toluidine, N-methyl-N-hydroxyethyl-*p-*toluidine, N,N-bis(2-hydroxyethyl)-*p*-toluidine and alkoxylated N,N-bis(hydroxyethyl)-*p*-toluidines, N-ethoxylated *p*-toluidine, N-alkylmorpholine and mixtures thereof. Transition metal salts and transition metal complexes are for example salts and complexes of cobalt, nickel, copper, manganese or vanadium. Mixtures of such substances may also be used as activator. Examples of tertiary amines is especially para-toluidine ethoxylate (CAS-No. 3077-12-1) which is available from GEO specialty chemicals under the trade name Bisomer^{®} PTE.

It is preferable when the composition in component A additionally contains an inhibitor for free-radical curing. This is selected from substances which slightly retard or moderate the free-radical mechanisms of curing or inhibit undesired curing reactions (for example UV light- or atmospheric oxygen-induced mechanisms), thus leading to improved storage stability and/or a more controlled, more uniform curing. Particularly preferred inhibitors are alkylated phenols, such as 2,6-di-tert-butyl-p-cresol (sold as Pergaslow PK-100 from Pergan), heterocyclic compounds such as (4-hydroxy-2,2,6,6-tetramethylpiperidin-1-yl)oxyl, commonly known as 4-Hydroxy TEMPO.

It is preferable when component **A** contains between 0.001 wt.-% to 0.5 wt.-%, more preferably 0.01 wt.-% to 0.2 wt.-%, based on the total weight of component **A,** of at least one inhibitor for free-radical curing.

Preferably the component **B** contains 5 to 60 wt.-%, preferably 10 to 40 wt.-%, most preferably 10 to 30 wt.-%, based on the total weight of **B,** of at least one initiator I for free-radical curing, in particular a thermally activatable free-radical former, preferably a peroxide, a hydroperoxide or a perester, most preferably dibenzoyl peroxide (DBPO), or a photoinitiator, in particular a photoinitiator which forms free-radicals upon irradiation with electromagnetic radiation having a wavelength of 230 nm to 400 nm.

The initiator I is a free-radical former that forms reactive free-radicals, thus initiating the free-radical curing mechanism of the monomers in component **A.**

Molecules suitable as such free-radical formers are in particular those which, under the influence of heat or electromagnetic radiation, form free-radicals which then result in polymerization of the composition.

Free-radical formers especially include thermally activatable free-radical formers and photoinitiators.

Preferred thermally activatable free-radical formers especially include those which are still sufficiently stable at room temperature but form radicals at even slightly elevated temperature. Such free-radical formers include in particular a peroxide, a perester or a hydroperoxide. Organic peroxides are preferred. Dibenzoyl peroxide is most preferred. Such thermally activatable free radical formers are for example commercially available as DBPO (CAS-No. 94-36-0) as Peroxan BP-Paste from Pergan.

Photoinitiators are free-radical formers which form free-radicals under the influence of electromagnetic radiation. Especially suitable is a photoinitiator which forms free radicals upon irradiation with electromagnetic radiation having a wavelength of 230 nm to 400 nm and is liquid at room temperature.

It is particularly preferable when the photoinitiator is selected from the group consisting of α-hydroxyketones, phenylglyoxylates, monoacylphosphines, diacylphosphines, phosphine oxides and mixtures thereof, in particular 1-hydroxycyclohexylphenylketone, benzophenone, 2-hydroxy-2-methyl-1-phenylpropanone, methylphenyl glyoxylate, oxyphenylacetic acid 2-[2-oxo-2-phenyl-acetoxyethoxy]ethyl ester, oxyphenylacetic acid 2-[2-hydroxyethoxy]ethyl ester, diphenyl(2,4,6-trimethylbenzoyl)phosphine oxide, phenylbis(2,4,6-trimethylbenzoyl)phosphine oxide and mixtures thereof. Such photoinitiators are for example commercially available from the IRGACURE^{®} and DAROCUR^{®} product lines of Ciba Speciality Chemicals, Switzerland.

Mixtures of photoinitiators may also be used.

Dibenzoyl peroxide (DBPO) is most preferred as the initiator I in component B. This is preferably employed dispersed in a plasticizer and with stabilizers.

Preferably, the component **B** contains 5 to 60 wt.-%, more preferably 10 to 50 wt.-%, most preferably 10 to 30 wt.-%, based on the total weight of component **B,** of at least one plasticizer **P.** Suitable plasticizers P include all nonreactive substances which are liquid at room temperature and are typically employed in (meth)acrylate compositions in this function.

A preferred plasticizer **P** comprises or consists of castor oil.

Component **B** of the composition according to the invention preferably additionally contains at least one additive selected from the group consisting of thixotropic additives and/or colorants.

Suitable colorants include nonreactive organic dyes and pigments.

Suitable thixotropic additives include all such additives typically used in (meth)acrylate compositions.

The composition may optionally additionally contain further constituents in one or both components. Such additional constituents include impact modifiers, dyes, pigments, UV and heat stabilizers, metal oxides, antistats, flame retardants, biocides, plasticizers, waxes, leveling agents, adhesion promoters, thixotropic agents, spacers and further raw materials and additives known to a person skilled in the art.

A further aspect relates to the mixing of the components **A** and **B.** In certain cases, it may be advantageous to give the two components **A** and **B** different colors. This allows the mixing quality to be checked during mixing of the components and mixing errors can be detected at an early stage. This measure also allows qualitative checking of whether the intended mixing ratio has been observed.

A further aspect of the invention relates to a package composed of a packaging and packaged material. The packaging comprises two chambers separated from one another. The packaged material is a two-component free-radically curing composition consisting of a first component A and a second component **B** as described above. Component **A** is in one chamber of the packaging and component **B** is in the other chamber of the packaging.

The packaging specially forms a unit in which the two chambers are held together or directly bound to one another. The separating means between the chambers may for example be a film or a breakable layer or one or two closures sealing an opening. In a preferred embodiment the packaging is a double cartridge. Such cartridge packaging is known in the prior art for two-component compositions and disclosed for example in WO2008151849. A further packaging option is a multi-chamber tubular bag or a multi-chamber tubular bag with an adapter, as disclosed for example in WO 01/44074 A1.

It is preferable when the mixing of the two components **A** and **B** is effected using a static mixer which may be attached to the packaging with two chambers preferably used for this process. In an industrial-scale plant, the two components **A** and **B** are typically stored separately from one another in vats or hobbocks and expressed and mixed on application, for example using gear pumps. The composition may be applied to a substrate manually or in an automated process using a robot.

The substrate on whose surface the mixed composition is applied may have been subjected to prior treatment with suitable pretreatment means or cleaning agents. It is particularly suitable to effect pretreatment/cleaning of the substrates with Sika^{®}Cleaner P or Sika^{®} ADPrep which are commercially available from Sika Schweiz AG.

Pretreatment of the substrates with primers and/or adhesion promoters may be useful in certain cases but compositions according to the invention have proven particularly advantageous because they may be applied primerless to numerous substrates, in particular to glass, PVC and metal surfaces, especially aluminum, without adverse effects on adhesion.

Another aspect of the invention relates to the use of the two-component composition according to the invention as a thermally conductive adhesive to bond, coat, or seal substrates, characterized in that at least one of the substrates is a battery or an electric or an electronic device.

Yet another aspect of the invention relates to the cured material obtained from curing the two-component composition according to the invention, characterized in that the cured material possesses excellent thermal conductivity, in particular of 1.0 W/mK, preferably of ≥ 1.5 W/mK, most preferably of ≥ 2 W/mK or higher, according to ASTM D5470.

Another aspect of the invention relates to a manufactured article that was bonded, coated or sealed using the two-component composition according to the invention, preferably a battery module consisting of one or more battery cells and a cooling unit, in particular a battery module that is connected to the cooling unit via a thermally conductive composition.

The invention further comprises a process for bonding substrates **S1** and **S2** comprising the steps of
i) applying the inventive two-component composition as described above to a substrate **S1**;
ii) contacting the applied composition with a second substrate **S2** within the open assembly time;
or
i') applying the inventive two-component composition as described above to a substrate **S1;**
ii') applying the inventive two-component composition as described above to a substrate **S2;**
iii') joining the two substrates **S1** and **S2** to which composition has been applied within the open assembly time;
wherein at least one of the substrates **S1** and **S2** is part of a battery or an electric or an electronic device and the second substrate **S2** is composed of a material identical or different to that of substrate **S1.** Steps i) or i') and ii') are preceded by a step I) of at partial or complete mixing of the two components.

In a preferred embodiment, the process for bonding substrates **S1** and **S2** as described above involves curing of the inventive two-component composition at room temperature.

In a preferred embodiment, the two component composition according to the invention comprises in a first component **A**
- 3 to 25 wt.-% of monomer **M** comprising free-radically polymerizable groups, containing especially at least one reactive double bond;
- 1 to 15 wt.-% of elastomer **E** comprising a polyurethane (meth)acrylate;
- 70 to 90 wt.-% of thermally conductive filler **TCF;**
- 0 to 5 wt.-% of adhesion promoter **AP;**
- 0 to 2.5 wt.-% of catalyst **C;**
- 0 to 0.2 wt.-% inhibitor **IN;**

and a second component **B** comprising
   - 5 to 60 wt.-% At least one initiator **I;**
   - 5 to 60 wt.-% of plasticizer **P;**
   - 25 to 90 wt.-% of other filler **F;**
   - 0 to 5 wt.-% of thixotropic additive;
   - 0 to 1 wt.-% of pigments;
characterized in that the total composition comprises at least 70 wt.-% of thermally conductive filler **TCF.**

### Examples

Examples intended to illustrate the effect of the invention are described hereinbelow.

### Synthesis of Elastomer E1

849 g of polyoxypropylene diol (Acclaim^{®} 4200 N, Bayer MaterialScience; OH number 28.5 KOH/g), 0.05 g of catalyst DBTL (dibutyltin dilaurate) and 101 g of 1-isocyanato-3,3,5-trimethyl-5-isocyanatomethylcyclohexane (isophorone diisocyanate or IPDI; Desmodur^{®} I, Bayer MaterialScience) were reacted at 60°C to afford an isocyanate-terminated polyurethane polymer having a titrimetrically determined content of free isocyanate groups of 1.88% by weight. Subsequently, 10 g of hydroxyethyl methacrylate (HEMA), which reacts with the free isocyanate groups to afford elastomer **E1** of formula (II), was added.

### Production of the compositions

For the first component **A** the constituents specified in tables 1 and 2a in the reported amounts were mixed with one another and incorporated by stirring in a dissolver at a temperature of not more than 45°C until a macroscopically homogeneous paste was obtained.

For the second component **B,** the constituents specified in tables 1 and 2b in the reported amounts were mixed with one another in a dissolver.

The produced components **A** and **B** were filled into the separate chambers of coaxial cartridges. For example compositions **E-1, E-2** and **E-3,** the employed volume ratio of components **A:B** was 10:1 resulting in a thermally conductive filler **TCF** content of 75 wt.-%.

### Material tests

The **glass transition temperature** was measured according to DIN EN ISO 6721-2.

The **thermal conductivity** was measured according to ASTM D5470-06.

The **tensile strength** and **elongation at break** was determined according to DIN EN 53504 (tensile test speed: 10 mm/min) on films having a layer thickness of 2 mm which cure over 1 day under standard climatic conditions (23±1°C, 50±5% relative humidity). The measurements were carried out on test specimens that had been stored at a room temperature of 23°C.

The **lap shear strength** was measured according to EN 1465. The freshly mixed mixture of the two components was poured in between two Aluminum substrates (AIMgs) with a 0.3 mm gap. The Aluminum substrates were not cleaned beforehand. The material was then left for curing for 1 day under standard climatic conditions (23±1 °C, 50±5% relative humidity). After 1 day the substrates were pulled apart as defined in the norm test.

The **fracture pattern evaluation** was measured according to DIN ISO 10365. The fracture pattern was evaluated by eye according to the following code:

| | |
|---|---|
| AF | >50% adhesive failure and <50% cohesive failure |
| CF | >50% cohesive failure and <50% adhesive failure |

### Compounds used in Compositions

**Table 1: Compounds used for the example compositions.**

| **Name** | **Description** | **Trade name** |
|---|---|---|
| Monomer **M1** | Benzyl methacrylate (monofunctional) | Visiomer^{®} BNMA |
| Monomer **M2** | Isobornyl methacrylate (monofunctional) | Visiomer^{®} Terra IBOMA |
| Monomer **M3** | Ethoxylated bisphenol A methacrylate (difunctional) | Miramer M245 |
| Elastomer **E1** | Methacrylate urethane with polyether backbone | See above for synthesis |
| Adhesion Promoter **AP1** | HEMA phosphate in TMP(3EO)TA | SR 9051 (Sartomer) |
| Thermally conductive filler **TCF** | Aluminium hydroxide (thermally conductive filler) | Martinal TM3810 |
| Catalyst **C** | Paratoluidine ethoxylate (amine activator for peroxides) | Bisomer^{®} PTE |
| Inhibitor **IN** | 2,6-Di-tert.-butyl-p-kresol | Pergaslow PK-100 |
| Initiator **I** | Dibenzoylperoxide (DBPO) | Peroxan BP-Paste |
| Plasticizer **P** | Castor oil | Alberdingk^{®} Rizinusöl first special grade (FSG) |
| Filler **F** | Treated calcium carbonate (other filler) | Omya BSH |

### Compositions used in Material Tests

Inventive example compositions E-1 to E-3 are identified in Tables 2a and 2b.

**Table 2a: Composition of component A. Values are in wt.-% totaling 100%.**

| **Component A** | **E-1** | **E-2** | **E-3** |
|---|---|---|---|
| Monomer **M1** | 5 | - | 6 |
| Monomer **M2** | 5 | 8 | 4 |
| Monomer **M3** | - | 2 | 3 |
| Elastomer **E1** | 5 | 5 | 2 |
| Adhesion Promoter **AP1** | 2 | 2 | 2 |
| Thermally conductive Filler **TCF** | 82 | 82 | 82 |
| Catalyst **C** | 0.8 | 0.8 | 0.8 |
| Inhibitor **IN** | 0.2 | 0.2 | 0.2 |

**Table 2b: Composition of component B. Values are in wt.-% totaling 100%.**

| **Component B** | **E-1** | **E-2** | **E-3** |
|---|---|---|---|
| Initiator **I** | 20 | 20 | 20 |
| Plasticizer **P** | 30 | 30 | 30 |
| Filler **F** | 50 | 50 | 50 |

### Material Tests

The results of the material tests are shown in table 3. It shows that the examples **E-1** and **E-3** have an excellent thermal conductivity, which is significantly higher than the thermal conductivity of example **E-2.**

Surprisingly, this effect does not stem from a difference in thermally conductive filler **TCF** content, but as shown in table 2a, is related to the composition containing monomer **M1.**

As expected, a decrease in elastomer **E1** content leads to a lower elongation at break and higher tensile strength, as shown by inventive example **E-3.**

**Table 3: Material tests.**

| **Test results** | **E1** | **E2** | **E3** |
|---|---|---|---|
| Glass transition temperature T_{g} (°C) | 41 | 51 | 78 |
| Thermal conductivity (W/mK) | 1.6 | 1.2 | 1.6 |
| Tensile Strength (MPa) | 7 | 8 | 16 |
| Elongation at break (%) | 6 | 9 | 0.5 |
| Lap shear strength (MPa) | 9 | 9 | 9.5 |
| Fracture pattern evaluation | CF | CF | CF |

## Claims

1. A two-component composition consisting of a first component **A** comprising
- at least one monomer **M** comprising free-radically polymerizable groups, containing especially at least one reactive double bond;
- at least one elastomer **E** comprising a polyurethane (meth)acrylate;
and a second component **B** comprising
- at least one initiator **I;** for free radical curing;
- optionally at least one plasticizer **P;**
**characterized in that** the total composition comprises at least 70 wt.-% of thermally conductive filler **TCF.**

2. The two-component composition according to claim 1, **characterized in that** the monomer **M** is according to formula (I), 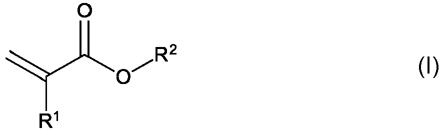 wherein
R¹ represents a hydrogen radical or a methyl group, preferably a methyl group;
R² represents a linear or branched monovalent hydrocarbyl radical having 2 to 20 carbon atoms and which optionally contains one or more C-C multiple bonds, and/or cycloaliphatic moieties, preferably a bicyclic moiety, and/or aromatic moieties, preferably a phenylic or benzylic moiety and/or heteroatoms, preferably nitrogen and/or oxygen.

3. The two-component composition according to any of claims 1 to 2, **characterized in that** monomer **M** comprises a monomer that is according to formula (I) and R² in formula (I) is a radical having 4 to 12 carbon atoms comprising an aromatic moiety and is according to one of the groups in formula (Ia) to (Ib) 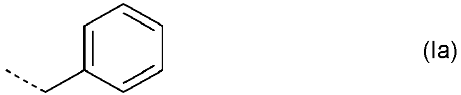 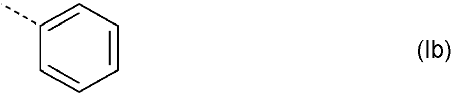 wherein the dashed lines in formulas (Ia) to (Ib) represent the bond between the oxygen atom and R², preferably monomer **M** comprises benzyl methacrylate.

4. The two-component composition according to any of claims 1 to 3, **characterized in that** monomer **M** comprises a monomer that is according to formula (I) and R² in formula (I) is a radical having 4 to 12 carbon atoms comprising a bicyclic moiety and is according to one of the groups in formula (Ic) to (Id) 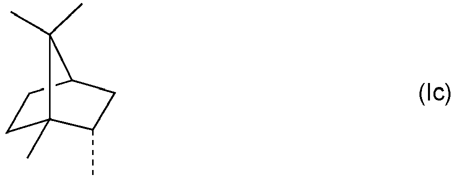 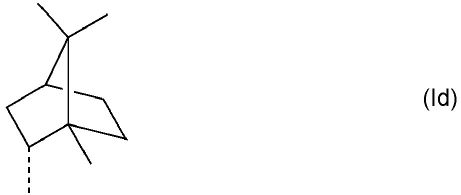 wherein the dashed lines in formulas (Ic) to (Id) represent the bond between the oxygen atom and R², preferably monomer **M** comprises isobornyl methacrylate.

5. The two-component composition according to any of claims 1 to 4, **characterized in that** the monomer **M** is a multifunctional monomer containing more than one reactive double bond and is according to formula (le) 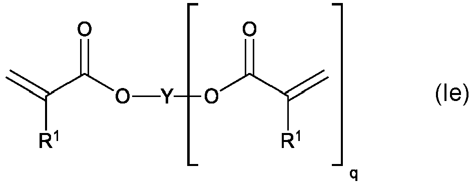 wherein
R¹ represents a hydrogen radical or a methyl group, preferably a methyl group;
Y represents either a hydrocarbyl radical having 2 to 20 carbon atoms, preferably a trimethyl propane after removal of the OH groups, or a polymeric diol after removal of the OH groups, or a Bisphenol A unit after removal of the OH groups, or a combination of these structures;
q represents a value from 1 to 3, preferably 1 to 2.

6. The two-component composition according to any of claims 1 to 5, **characterized in that** the monomers **M** according to formula (I) in combination with (Ia) or (Ib), especially benzyl methacrylate, are present in component **A** in an amount that ranges from 3 to 12 wt.-%, preferably from 3 to 9 wt.-%, most preferably from 4 to 6 wt.-%, together with monomers **M** according to formula (I) in combination with (Ic) or (Id), especially isobornyl methacrylate, in an amount that ranges from 3 to 12 wt.-%, preferably from 3 to 9 wt.-%, most preferably from 4 to 6 wt.-%, based on the total weight of component **A.**

7. The two-component composition according to any claims 1 to 6, **characterized in that** the elastomer **E** is according to formula (II) 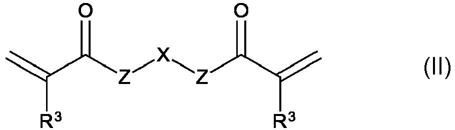 wherein
X represents a polymeric diol after removal of two OH groups;
Z represents O or NR', wherein R' is a hydrocarbyl radical or a hydrogen radical, preferably a hydrogen radical;
R³ represents either a hydrogen radical or a methyl group;

8. The two-component composition according to any claims 1 to 7, **characterized in that** the thermally conductive filler **TCF** comprises or consists of aluminium oxide, aluminium hydroxide, boron nitride, aluminium nitride, zinc oxide, magnesium oxide, magnesium hydroxide, preferably aluminium hydroxide, and any mixture of these fillers.

9. The two-component composition according to any of claims 1 to 8, **characterized in that** the composition comprises other fillers **F** such as natural, ground or precipitated calcium carbonates (chalks), which are optionally coated with fatty acids, in particular stearates, montmorillonites, bentonites, barium sulfate (BaSO4, also known as barite or heavy spar), calcined kaolins, quartz flour, silicas, in particular pyrogenic silicas, hydrated magnesium silicates (talcs), especially talc powder, modified castor oil derivatives and polymer powders or polymer fibers and any mixture of these fillers.

10. The two-component composition according to any claims 1 to 9, **characterized in that** the composition in component **A** additionally contains 0.1 to 2.5 wt.-%, preferably 0.5 to 2 wt.-%, based on the total weight of **A,** of at least one catalyst **C** for free radical curing, preferably a tertiary amine, most preferably para-toluidine ethoxylate.

11. The two-component composition according to any claims 1 to 10, **characterized in that** the component **B** contains 5 to 60 wt.-%, based on the total weight of **B,** of the at least one initiator I for free-radical curing, in particular a thermally activatable free-radical former, preferably a peroxide, a hydroperoxide or a perester, most preferably dibenzoyl peroxide (DBPO), or a photoinitiator, in particular a photoinitiator which forms free-radicals upon irradiation with electromagnetic radiation having a wavelength of 230 nm to 400 nm.

12. The two-component composition according to any claims 1 to 11, **characterized in that** the component **B** contains 5 to 60 wt.-%, more preferably 10 to 50 wt.-%, most preferably 10 to 30 wt.-%, based on the total weight of component **B,** of at least one plasticizer **P,** preferably castor oil.

13. The two-component composition according to any claims 1 to 12, **characterized in that** the component **B** contains 25 to 90 wt.-% of thermally conductive filler TCF, based on the total weight the component **B.**

14. Use of the two-component composition according to any of claims 1 to 13 as a thermally conductive adhesive to bond, coat, or seal substrates.

15. Use according to claim 14, **characterized in that** at least one of the substrates is a battery or an electric or an electronic device.

16. The cured material obtained from curing the two-component composition according to any of claims 1 to 13, **characterized in that** the cured material possesses excellent thermal conductivity, in particular of ≥ 1.0 W/mK, preferably of ≥ 1.5 W/mK, most preferably of ≥ 2 W/mK or higher, according to ASTM D5470.

17. A manufactured article that was bonded, coated or sealed using the two-component composition according to any of claims 1 to 13, preferably a battery module consisting of one or more battery cells and a cooling unit, in particular a battery module that is connected to the cooling unit via a thermally conductive composition.

18. A process for bonding substrates **S1** and **S2** comprising the steps of
i) applying the two-component composition as claimed in any of claims 1 to 13 to a substrate **S1;**
ii) contacting the applied composition with a second substrate **S2** within the open assembly time;
or
i') applying the two-component composition as claimed in any of claims 1 to 13 to a substrate **S1;**
ii') applying the two-component composition as claimed in any of claims 1 to 13 to a substrate **S2;**
iii') joining the two substrates **S1** and **S2** to which composition has been applied within the open assembly time;
wherein at least one of the substrates **S1** and **S2** is part of a battery or an electric or an electronic device and the second substrate **S2** is composed of a material identical or different to that of substrate **S1**;
and wherein steps i) or i') and ii') are preceded by a step I) of partial or complete mixing of the two components **A** and **B.**

19. The process for bonding substrates **S1** and **S2** according to claim 18, characterized that it involves curing of the inventive two-component composition at room temperature.

20. The two-component composition according to any of claims 1 to 13, comprising in a first component **A**
- 3 to 25 wt.-% of monomer **M** comprising free-radically polymerizable groups, containing especially at least one reactive double bond;
- 1 to 15 wt.-% of elastomer **E** comprising a polyurethane (meth)acrylate;
- 70 to 90 wt.-% of thermally conductive filler **TCF;**
- 0 to 5 wt.-% of adhesion promoter **AP;**
- 0 to 2.5 wt.-% of catalyst **C;**
- 0 to 0.2 wt.-% inhibitor **IN;**
and a second component **B** comprising
- 5 to 60 wt.-% At least one initiator I;
- 5 to 60 wt.-% of plasticizer **P;**
- 25 to 90 wt.-% of other filler **F;**
- 0 to 5 wt.-% of thixotropic additive;
- 0 to 1 wt.-% of pigments;
**characterized in that** the total composition comprises at least 70 wt.-% of thermally conductive filler **TCF.**
